(19) Europäisches Patentamt / European Patent Office / Office européen des brevets

(11) **EP 2 602 715 B1**

(12) **EUROPEAN PATENT SPECIFICATION**

(45) Date of publication and mention
of the grant of the patent:
**23.05.2018 Bulletin 2018/21**

(51) Int Cl.:
***G06F 9/50*** *(2006.01)*

(21) Application number: **11191925.4**

(22) Date of filing: **05.12.2011**

(54) **Task subdivision, distribution, and offloading for systems from mobile environments to data centers**

Aufgabenunterteilung, -verteilung und Auslagerung für Systeme von mobilen Umgebungen an Datencenter

Sous-division, distribution et déchargement de tâches pour des systèmes depuis des environnements mobiles vers des centres de données

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.06.2013 Bulletin 2013/24**

(73) Proprietor: **Deutsche Telekom AG**
**53113 Bonn (DE)**

(72) Inventors:
• **Hui, Pan**
**10709 Berlin (DE)**
• **Burksaitis, Adas**
**Cambridge CB2 8HP (GB)**

(74) Representative: **Vossius & Partner**
**Patentanwälte Rechtsanwälte mbB**
**Siebertstrasse 3**
**81675 München (DE)**

(56) References cited:
**EP-A1- 2 166 451**    **US-A1- 2009 241 122**
**US-A1- 2009 271 784**    **US-A1- 2010 318 999**

**Description**

<u>Technical Field</u>

The present invention relates to a method according to the preamble of independent claim 1 and more particularly to computer programs for implementing such a method. Such methods in which in which a computer program application is divided into a plurality of computational tasks and at least one of the computational tasks is distributed by a executing node to at least one assisting node which is connected to the executing node via a network can be used for executing the computer program application wherein resources of the executing node can and of the assisting node can be shared.

<u>Background Art</u>

In an environment where devices with varying computational capabilities and battery lifetime communicate together, the need to consider programs offloading to remote nodes arises. Such environments have recently become very popular, e.g., due to the growth in smartphone market. However, these devices often are not computationally powerful and have limited battery power, therefore, usually cannot do resource-intensive computations themselves.

Looking from a slightly different perspective, rapid growth in the handheld devices or smartphone market indicates the need of new communication paradigms. In a similar manner as people communicate using language, it is believed that there is need for an elegant way for devices to communicate and form powerful networks wherever they are despite of their size, architecture, or other characteristics. Otherwise data, experience and resources are wasted which is often not because people are reluctant to share but because of lack of technical opportunities.

In prior art, there exist publications on the idea of splitting a big task into smaller chunks and offloading it in parallel for remote execution. Most of them are designed for systems with a master node and guaranteed high bandwidth connection between participating nodes. Hence, they usually do not fit more complex mobile networks well.

For example, a well known project for distributed computing is MapReduce [1]. It proposes a highly restricted framework, orienting a programmer towards designing the functions so that their parallel computations can be easily coordinated. However, MapReduce has many drawbacks particularly for mobile networks and can only be successfully applied to a very restricted set of tasks such as data crawling where parts of an application are very loosely related. Many of the tasks which are the most common in mobile environments are impossible to successfully distribute. Furthermore, most tasks are hard to express in terms of map and reduce functions on data.

Another kind of related projects, namely mobile-to-cloud computation offloading, has received research interest. Most of the known work focuses on offloading application as a whole. However, later papers have observed the necessity to create tools for offloading parts of an application. Motivation and implementation for this can be found in such works as MAUI [2] and CloneCloud [3]. They demonstrate that mobile nodes are often not powerful enough for one node to complete all the work. MAUI as well as MapReduce give examples of the benefits of encouraging a programmer to provide the system with more knowledge about the possibility to split an application into parts by using a specific syntax, i.e. annotations in the former and map and reduce functional primitives in the latter.

The sophisticated nature of the problem of task offloading forced researchers to search for a solution by creating new and more flexible paradigms than MapReduce or MAUI. However, these models are highly criticized for their narrowness by the successors like [4]. Trends also show that data-flow model is very popular for creating applications with offloading primarily in mind, since communicating and triggering execution through data arises as a natural way for offloading (see [4], [5], [6], [8]).

A vital issue of computational complexity is that any system offering efficient offloading of task execution to a set of nodes efficiently must be able to base its judgements on task complexity. Without tools of evaluating complexity, a system usually cannot guarantee the best or even good distribution scenario. The challenge here is that the conventional syntax, like function calls, loops, branches, etc. complicate matters, since their complexity con not be evaluated. SkyWriting [10], for example, is a scripting language working with CIEL execution engine, which provides the possibility to spawn new tasks from inside a given SkyWriting task. This is a main tool for creating new tasks from inside another task. However, SkyWriting does not seem to provide any complexity evaluation support and, e.g., does not answer the questions of how to evaluate function complexity (which spawns others with existing branches without knowing their outcome), and of how to decide in which case to offload and where to offload spawned functions so it is optimal in the sense of complexity.

This drawback in some cases turns out to be a problem for fine grained subdivided tasks and therefore, in particular for mobile systems where nodes need to be assigned tasks that they can accomplish. The main difficulty causing characteristics of mobile systems include varying usually small computational capabilities, differences in willingness to help, varying amount of time spent connected to the network and varying network overheads and signal strength.

Another problem arising from spawning tasks from nodes which tasks are allocated to is that a network of tightly coupled nodes is created. In SkyWriting tasks block waiting for results from the spawned tasks. E.g., SkyWriting uses continuation tasks to reschedule the execution. However, a system for a mobile environment should operate efficiently with high node dynamics, i.e. nodes leaving and entering the network frequently. Hence, using continuations would often cause a node to fail or refuse to continue execution of a task.

For this reason, SkyWriting may cause significant overhead by forming such network. CIEL supports master fault tolerance. However failure of one node spawning many tasks can cause significant networking and re-execution overhead. Furthermore, when task is blocked waiting for results from another nodes, its time in the network, which is likely to be relatively short for mobile nodes, is wasted. One solution is to reduce failure rates, but it is difficult to ensure and the problem could also be mitigated if computational complexity could be evaluated well.

Furthermore, the need to restrict state communication among tasks has been pointed out in [1] or [9]. MapReduce [1] inherently (from the functional concepts it is based on) restricts a programmer from communicating state by any means. Frameworks providing more flexibility have heavily criticized these restrictions [5], [10] - it is very important to eliminate the need for tasks to access shared state using remote procedure calls (RPC) to allow task execution to completion when offloaded. It is particularly in mobile environments also important to make a programmer design applications so that fine grained offloading can be achieved [7]. Furthermore, US 2009/271784 A1 discloses executing a distributed Java application on a plurality of compute nodes. The Java application includes a plurality of jobs distributed among the plurality of compute nodes. The plurality of compute nodes are connected together for data communications through a data communication network. Each of the plurality of compute nodes has installed upon it a Java Virtual Machine ('JVM') capable of supporting at least one job of the Java application. Executing a distributed Java application on a plurality of compute nodes includes: tracking, by an application manager, JVM environment variables for the JVMs installed on the plurality of compute nodes; and configuring, by the application manager, the plurality of jobs for execution on the plurality of compute nodes in dependence upon the JVM environment variables for the JVMs installed on the plurality of compute nodes.

US 2010/318999 A1 discloses partitioning execution of a program between a client device and a cloud of network resources, exploits the asymmetry between the computational and storage resources of the cloud and the resources and proximity of the client access device to a user. Programs may be decomposed into work units. Those work units may be profiled to determine execution characteristics, modeled based on current state information and the profile, and a model performance metric (MPM) generated. Based on the MPM, work units may be partitioned between the client and the cloud.

US 2009/241122 A1 discloses selecting a number of processors to run an application in order to save power is performed. A number of code segments are selected from an application. Each of the code segments are executed using two or more of a plurality of processing resource combinations. Each of the code segments are scored with a performance value. The performance value indicates a performance of each code segment using each of the two or more processing resource combinations. A selection is made of one of the two or more processing resource combinations based on an associated performance value and a number of processing resources used to execute the code segment. The application is then executed using the selected processing resource combination.

Therefore, there is a need for a method, computer program or system allowing to efficiently offloading tasks within execution of a computer application particularly suitable for mobile environments.

Disclosure of the Invention

According to the invention this need is settled by a method as it is defined by the features of independent claim 1, by computer programs as defined by the features of independent claim 12. Preferred embodiments are subject of the dependent claims.

In particular, the gist of the invention is: A method of executing a computer program application, in which the computer program application is divided into a plurality of computational tasks and at least one of the computational tasks of the computer program application is distributed by a executing node to at least one assisting node which is connected to the executing node via a network, is characterized in that the executing node provides a task evaluation function to a plurality of nodes connected to the executing node via the network requesting node properties of each of the nodes of the plurality of nodes; each of the nodes of the plurality of nodes provides its node properties to the executing node in accordance with the task evaluation function; the executing node evaluates the node properties of the plurality of nodes to identify the one of the plurality of nodes which suits for performing the at least one of the computational tasks as the at least one assisting node for the at least one of the computational tasks; and the executing node distributes the at least one of the computational tasks of the computer program application to the identified at least one assisting node.

In the following description the term "task" is used wherein, generally, it relates to a computational task of the computer application. Within the method according to the invention the executing node as well as possibly also the at least one assisting node can be mobile nodes such as any mobile devices like smartphones, laptop computers, personal digital assistants or the like. The executing node and particularly the assisting node can also be non-mobile nodes such as desktop computers, server computers, network devices or the like. The network can particularly comprise a mobile network such as a wireless network like a wireless local area network (WLAN), a cellular network such as Global System for Mobile Communications (GSM), General Packet Radio Service (GPRS), Enhanced Data Rates for GSM Evolution (EDGE) or Universal Mobile Telecommunications System (UMTS), or the like. The term "offload" as used herein can particularly relate to the distribution of computational tasks to remote nodes or devices within the network.

The method according to the invention allows for providing specific conventions for even primitive syntactic elements to reflect the nature of a distributed system such as the plurality of nodes connected via the network rather than adding tools for solving some specific problems without incorporating them semantically to the trends and orientation of the paradigm expressed.

As shown above, flexible task offloading particularly for mobile devices such as smartphones may be crucial to support some of the heavy tasks like image or voice processing. Also, such mobile devices often experience short battery lifetimes and research in the area shows that the trends are not likely to change. As such mobile devices are becoming increasingly popular it can be expected that after a decade in all the public places like metro, restaurants, city sights, schools, etc. there is going to be huge computational capabilities if united together but nothing appreciable if separately. Therefore, the importance of device computational networking could essentially increase since it can make use of the devices' environment, idle resources, employ social networks and others.

In this context, the method according the invention addresses the problem of task offloading. Even though it can also suit for other environments, it can be primarily designed for a mobile environment with no guarantees for access point. It aims to make use of the main features of mobile networks to exploit its computational and/or other capabilities. In such circumstances it can not be assumed that a stable server having comparably big computational power is provided. For this reason, the problem of dynamic and finer grained task distribution than in usual circumstances has to be solved. Thereby, on the one hand fine grained is important because it allows bigger level of parallelism, offloading to different nodes and eases the problem of mobile nodes not having enough time or being reluctant to perform heavy tasks. Dynamic, on the other hand, can be dictated by the nature of the environment which can be hardly predictable and ever-changing.

Therefore, by the method according to the invention a novel approach is offered with regard to the decision making procedure of task offloading. In particular, by implementing the task evaluation function in accordance with the method of the invention the environment or the qualities of the network and its nodes can efficiently be evaluated in order to offload or distribute tasks within the environment on a fine grained dynamic level. Particularly in a mobile environment, the executing node can usually not be sure of other devices' qualities such as computational capabilities, idleness, willingness to participate, etc. which makes the requirements for offloading very different from mobile-to-server offloading. Such qualities are therefore important while their relative importance is application specific. The method according the invention allows, e.g., a programmer or a system to get an insight into these qualities by implementing the task evaluation function for each task. The function is sent to the nodes in the network for election of the executing node for the task. It handles the problem of decision procedure, allowing to quickly finding the most suitable devices and allows the programmer or system to exploit some features of the distributed system state like its size, the network it forms, etc. Since the offloading procedure can also offer a programmable interface to the underlying distributed system, a programmer's creativity allows him to use it to get internal knowledge into system's qualities and state, judging on which the decision of offloading is made.

Further, within the method according to the invention, by using the task evaluation function a programmer can define what he wants to achieve by offloading a task. A common case can, e.g., be optimization in terms of execution time. However, there can also be a need for offloading to a specific node which has specific features such as a suitable location or a specific device architecture. The task evaluation function can bring a possibility to implement these qualities with just a few lines of code. For this reason, offloading does not mandatorily have to be done with time efficiency primarily in mind. Rather, task offloading can be at a different abstraction level, and all the tools work to contribute to whatever programmer's intentions are. In this context, the method according to the invention can be embodied in an implementation of a platform performing task offloading for the tasks written in a specific language which is in the following referred to as RETSASID.

In a preferred embodiment of the method according to the invention, the at least one of the computational tasks is arranged in a body portion and a header portion, the body portion comprising source code of the at least one of the computational tasks to be executed and the header portion comprising arguments for the body portion.

As background for this preferred embodiment, it can be noted that even though prior work has heavily used data-driven paradigm there was no pressure on cooperation between programmer and task manager or executing node to achieve as fine grained subdivision into disjoint units as possible suitable for offloading. For example, MapReduce [1] makes application out of many disjoint units which can be offloaded to separate devices by choosing loose coupling approach at the cost of restricting set of applications comfortable to program on the framework [5]. Conversely, MAUI [2] does not impose many restrictions on what a programmer can do, but it also does not give much of insight and guidance on how to write code easily dividable into disjoint units to be offloaded separately and, if possible, in parallel.

Therefore, with in the prior art it is a difficult task for a programmer to give enough insight for a system to perform the subdivision well. Consequently, MAUI framework can end up in a position, where it may offer either offloading all the application or not at all. It is natural conclusion to make, because many conventional programming languages allow communication of the state without restrictions and heavy use of the global state. Therefore, known programmers' implementations tend to be so tightly coupled that successful offloading cannot be made.

To address this problem, the at least one of the computational tasks is arranged in the body portion and the header portion. This can be designed to compensate for the lack of global state and function calls. Most importantly, it allows the executing node to identify iteration and recursion, offloading each unit of these definitions separately and parallelizing them. Finally, it can provide orientation of implementation towards a dependency graph. Mastering the body portion and the header portion in some cases can allow implementing disjoint suitable for offloading task units at a very fine grained level.

In particular, nothing but this can form the means of communication amongst tasks. Having disjoint tasks can be important to aid the decision making for offloading procedure. Thus, the combination of the task evaluation function and arrangement of the tasks in the body portion and the header portion can form the basis of efficient complexity evaluation. Considering the arrangement of the tasks in the body portion and the header portion, it can effect that each task executes to completion, in connection to this, complexity evaluation restricting tools can be raised to the level of the task header. Namely, there can be specific tools for branching, loops and recursion implementation in the task header definition. It is done in system specific ways, therefore, system can get further insight into complexity, even though the conventional syntax in the task body is not removed since in some cases may be considered useful. The qualities can make implementation of task evaluation signature much easier in many cases because task units are independent, closed, with no external effects, so can be isolated for individual investigation.

Preferably, the task evaluation function is arranged in a body portion and a header portion, the body portion comprising source code of the task evaluation function and the header portion comprising arguments for the body portion. Like this, the task evaluation function can be treated as a regular computational task having the benefits mentioned above.

Preferably, a complete flag is associated to each argument of the header portion. In this context, the term "flag" can relate to an attribute of arguments being definable as true or false. The complete flag allows qualifying the arguments within handling of the computational task. For example, an argument being flagged as non-complete can be allowed with the intention of being completed by other computational tasks' definitions which are using its result. Also, an argument being flagged as complete can be allowed to be extended by other tasks.

Preferably, a header protocol is provided defining the structure of the header portion. Such a header protocol can define a protocol for communicating data among tasks. In the following an embodiment of such a protocol is referred to as TaskHeader.

Preferably, the at least one assisting node provides results of the at least one of the computational tasks of the computer program application to the executing node in a predefined format. Such a predefined format can be a Primitive. Definition of Primitive in this context can vary from one implementation to another but important features it can have are: 1) From the type, it must be possible to decide how much memory it requires. This feature makes the complexity evaluation easier, since input/output size is usually significant factor when offloading to the network or analyzing the data. Therefore, a programmer in his implementation must specify the type/size of Primitive it uses. It is done for each task, to control its result size, and for each task's each input, to control the inputs size. 2) It must give enough flexibility to express various data constructs like integers, strings, lists, etc. More sophisticated features, like enabling Primitive to contain a data structure definition with its instance itself, are platform implementation dependent.

Preferably, a computational task comprising iteration and/or recursion is identified within the plurality of computational tasks of the computer program application and the identified computational task is set as the at least one of the computational tasks of the computer program application. Such a identification allows for an efficient offloading of particularly resource intensive tasks.

Preferably, after evaluating the node properties of the plurality of nodes, the executing node arranges plural of the plurality of computational tasks to a bundle in accordance with the node properties of the plurality of nodes and distributes the bundle to the at least one assisting node. To provide fine grained offloading possibility TaskHeader can offers instantiation of many different units which can roughly mean instantiating a task with different input values. All task's units can be executed separately with its own input values. The task evaluation function can be specified so it returns the function c(x), which returns the complexity of evaluating x units. Thereby, bundling can mean that a set of task instances is offloaded at once rather than just one. Benefits of distributing the bundle to the at least one assisting node can be: giving task evaluation function control over the offloading chunks; reducing size of data transferred through the network, i.e. task code is sent once per set of instances, not for every instance, resulting in compact TaskHeader; or no need to set up connection and suffer from networking overhead for each unit that is offloaded. To sum up, bundling can helps to adjust right scale of subdivision thereby increasing efficiency of offloading in accordance with the given situation.

Preferably, the computational tasks of the computer program application are ordered in accordance with predefined criteria. Within such ordering each task can represent a node in a ordering graph. There can be an unconditional edge from a task instance A to a task instance B, if and only if task instance B uses the result of task instance A, meaning that B can be executed just after A. It can be a data-flow driven structure. The order used for execution can naturally be the topological sort order, i.e. nodes without incoming edges are scheduled for execution when their results are received, edges are removed, and new nodes are scheduled. Using this approach, a way to implement branching can be A -> B, C (meaning if A then B, else C) can be equivalent to including a conditional-True edge from A to B, meaning that B is going to be executed, if and only if, task A returns logical True value and including a conditional-False edge from A to C, meaning that C is going to be executed, if and only if, task A returns logical False value. Thereby, the predefined criteria can comprise any criteria suitable for such sorting such as data size, function complexity or the like. With such ordering the efficiency of offloading can be further increased. Thereby, the predefined criteria preferably comprise dependencies between the computational tasks of the computer program application.

Preferably, the task evaluation function is predefined prior being provided to the plurality of nodes by the executing node. By providing a predefinable task evaluation function as a programmable interface to a distributed system the method allows for extracting the nodes' capabilities with regard to the execution of a specific task, i.e., the at least one computational task. Within the evaluation of the node properties of the plurality of nodes, capabilities are judged from the score returned whereas the, e.g., a programmer extracts the information about these capabilities from the nodes and how he defines capabilities may vary depending on the code in the task body and the task header. Like this it is possible to flexibly provide the computational task to the assisting node such that the nodes capabilities within the network are optimized for the respective task and hence for the execution of the computer program application.

Another aspect of the invention relates to a computer program comprising computer executable program code adapted to be executed to implement the method described above when being executed. Such a computer program allows an efficient implementation of the method according to the invention together with the respective effects and advantages.

A further other aspect of the invention relates to a computer program comprising computer executable program code adapted to be executed to provide a platform for programming a computer program application in accordance with the method described above. Such a computer program allows a programmer to efficiently develop software implementing the method according to the invention together with the respective effects and advantages.

These and other aspects of the invention will be apparent from and elucidated with reference to the embodiment(s) described hereinafter.

Brief Description of the Drawings

The method and computer programs according to the invention are described in more detail herein below by way of an exemplary embodiment and with reference to the attached drawings, in which:

Fig. 1    shows a structure of a computer application written an accordance with an embodiment of the method according to the invention in the language RETSASID wherein the computer application comprises a set of tuples <task, signature> and a set of branches;

Fig. 2    shows an ordering graph of an embodiment of the method according to the invention wherein Fig. 2A shows an initial outline structure of the orering graph and Fig. 2B shows a structure outline after Pred(100);

Fig. 3    shows an execution flow overview of the steps taken by a TaskManager within an embodiment according to the invention; and

Fig. 4    shows conditional edges representing a branch within an embodiment of the method according to the invention.

Mode(s) for Carrying Out the Invention

In the following description single components and processes of examples as embodiments of the method and the computer programs according to the invention are explained with the help of the figures.

Programming language RETSASID implementing embodiments of the invention

As a program structural overview each program in the language is made of a set of tuples of <task evaluation function, task> and a set of branches. Tasks are implemented to drive execution, and provide results, whilst task evaluation function is like a task's signature, which is sent to the network to decide where the task is to be executed. Task, as well as task evaluation function, is made of a tuple of <TaskHeader, TaskBody>. Where TaskBody is the code, to be executed, and TaskHeader defines the input values to TaskBody. Therefore, task evaluation function is just a special type of a task.

Branches, meanwhile, have different syntax. It performs branching at task level. This is not the only way of branching but system controlled way, and providing system with this knowledge is useful in many occasions. The execution is data-flow driven, so every task can be executed and necessarily is executed by a TaskManager implemented on a executing node when all its inputs are ready. To get inputs ready, TaskManager for every tasks schedules all of its required input tasks for execution if it has not been scheduled before. This operation is done recursively, since for some inputs TaskManager may need to schedule another inputs, and so on.

For TaskHeader various functional definitions are possible comprising following examples:

Definition 1, i.e. the broadest definition:

```
Primitive TaskHeader =
      | Name * List of Argument
void Argument =
      | Name
      | Name * Initializer
      | TaskHeader
void Initializer =
      | Primitive // primitive initializers
      | TaskHeader // initializing by task's results, i.e. using task's results
      | List of Initializer
```

Definition 2:

TaskHeader is complete, if and only if, it is made of Name and a list of Argument, and all members of the list are complete.

Argument is complete, if and only if, it is made of Name and Initializer, and the Initializer is complete, or it is made of TaskHeader, and the TaskHeader is complete.

Initializer is complete, if and only if, one of the three cases below holds:

1) it is made of Primitive wherein the format Primitive which is used for results communication between different tasks is discussed below
2) it is made of TaskHeader, which is complete
3) it is made of list of Initializer, and all members of the list are complete.

TaskHeader can be executed by TaskManager, if and only if, it is complete.

Definition 3 which is defined to be complete and can represent many instances:

```
Primitive TaskHeader_Complete =
      | Name * List of InstanceArgument
void InstanceArgument =
      | Name * Initializer_Instance
      | TaskHeader_Complete
void Initializer_Instance =
      | Primitive
      | TaskHeader_Complete
      | List of Initializer_Instance
```

TaskHeader_Complete is of exactly the same power as TaskHeader, except that it has to be complete. Therefore, for each TaskHeader, which is complete, there exists corresponding TaskHeader_Complete. From definition 2, only TaskHeader_Complete type can be executed. From TaskManager perspective, it starts treating TaskHeader as TaskHeader_Complete, when it has the results for all TaskHeader's inputs.

Definition 4 for which sake the relation for transition between these two definitions is defined: Informally, TaskHeader A is said to correspond to TaskHeader_Complete B, if and only if:

1. There is no Argument in A of the form "Name", i.e. no not initialized Argument, and
2. if A', received from A, after performing the following renaming:

TaskHeader -> TaskHeader_Complete

```
Argument -> InstanceArgument
Initializer -> Initializer_Instance
```

A' is letter for letter equivalent to A (i.e. all the symbols coincide).

Defintion 5:

```
Primitive TaskHeader_Unit_Complete = //one instance; defined to be complete
       | Name * List of UnitArgument_Initialized
void UnitArgument_Initialized =
       | Name * UnitInitializer
       | TaskHeader_Complete
void UnitlnitiaIizer =
       | Primitive
```

TaskManager executes TaskHeader_Unit_Complete. Set of members is extracted from TaskHeader_Complete using the algorithm from definition 8.

Definition 6:

```
Primitive TaskHeader_Unit_Not-Complete =
       | Name * List of UnitArgument_Not-Initialized
void UnitArgument_Not-Initialized =
       | Name
       | Name * Unitlnitializer
       | TaskHeader
```

Definition 7:

```
Primtive TaskHeader_Definition =
        | Name * List of Argument
void Argument =
       | Name
       | Name * Initializer_Top
       | TaskHeader //when use another task, relax its initialization to a general level
void Initializer_Top =
       | Primitive
       | TaskHeader_Unit_Not-Complete //need to ensure just one instance of top Argument is
passed
       | Initializer
```

Definition 8:
TaskHeader_Complpete is executed with all possible different combinations of initializers (two combinations are called different if they have different initializer for at least one argument).

Definitions 9 and 10:

Any occurence of TaskHeader B in TaskHeader A, is called instantiation
Any Initializer added to TaskHeader B from TaskHeader A, is called instantiation of B from A.

An important access rule is: If TaskHeader_Complete A instantiates, as its direct Argument, TaskHeader_Complete B, then A can access the units of B, which are defined as follows: The units, which can be extracted (by definition 8 above) from TaskHeader_Completed C, which is formed as follows: By using the same form as TaskHeader_Complete B but with InitializerS being: all the InitializerS, which have been provided by all definitions, to any Argument inside B, plus the initializers of definition of A.

This functional definition canbe used as a compact representation to express and analyze the qualities of TaskHeader, not to represent intended syntax to be used.

Considering the above definitions, generally, TaskHeader is the only way to communicate amongst different tasks. Since tasks cannot access global variables, and do not keep global state in any other form. At this point it is discussed TaskHeader_Definition, since it is the only programmer is concerned with. It is exact format used for the definition of each task.

TaskHeader_Definition is specified by a name, and a list of its arguments. Each argument itself can be either complete or not complete argument. Not complete arguments are allowed with the intention of being completed by another tasks' definition, which are going to use its result. Complete arguments are also allowed to be extended by other tasks.

The use of result is declared by defining the TaskHeader A which can be used as an argument of TaskHeader B. These intermediate definitions are not enforced to be complete. However, when B is passed to TaskManager for execution it must be complete as defined above. From this follows, that TaskHeader A must be complete at the time. Now, assuming TaskHeader B uses TaskHeader A, B is allowed to use the results of all the task units of A, which are derived from A by the algorithm provided above. Task's B TaskBody accesses the task units' results, by their definition. Task cannot access ArgumentS recursively of the task units it uses. Task can access just its direct arguments results.

Initializer_Top specifies the values, which are fed to argument, which it initializes. It is the way for a task to say, what instances of another task it wants to use. Initializer_Top is used instead of an ordinary Initializer, to forbid the possibility for a TaskHeader to initialize the same argument with more than one Primitive value at its own definition. It is forbidden for consistency of semantics, which sticks to the idea that task is purely executional unit, and TaskHeader defines just what the task needs to use, not initializes the task.

There is another case worth noting: each task can be initialized, re-initialized, and so on, however, accessing these variables differs: each task access all the InitializerS provided at the time of definition of all the enclosing Task-HeaderS by InitializerS (like constants), and all the InititalizerS, which came as instantiations from other TaskHeaderS are accessed by argument's name. For instance, consider set of TaskHeaderS:

A(x, y)

$$B(A(x = \{Init1, Init2\}, y = \{Init1, Init2\}))$$

$$C(B(A(x = \{Init3, Init4\}, y = \{Init3, Init4\}))).$$

Whenever B is executed, it can access A(Init1, Init1), A(Init1, Init2), A(Init2, Init1), A(Init2, Init2) by constants, and it will access all the other by A(x, y).

C will instantiate and access by name:

B(A(Init1, Init1)), B(A(Init1, Init2)), B(A(Init1, Init3)), B(A(Init1, Init4)),
B(A(Init2, Init1)), B(A(Init2, Init2)), B(A(Init2, Init3)), B(A(Init2, Init4)),
B(A(Init3, Init1)), B(A(Init3, Init2)), B(A(Init3, Init3)), B(A(Init3, Init4)),
B(A(Init4, Init1)), B(A(Init4, Init2)), B(A(Init4, Init3)), B(A(Init4, Init4)).

Also, it is to note that C does not need to instantiate any ArgumentS to get run, since B is complete itself. Or it could also have instantiated just one, for instance:

C(B(A(x = {Init3, Init4}, y))).

Then nothing changes for B. Meanwhile, C instantiates and accesses:

B(A(Init1, Init1)), B(A(Init1, Init2)),
B(A(Init2, Init1)), B(A(Init2, Init2)),
B(A(Init3, Init1)), B(A(Init3, Init2)),
B(A(Init4, Init1)), B(A(Init4, Init2)).

The reasons why TaskHeader flexibility can be crucial comprise: Some people may think that TaskHeader introduced is simple isolator of tasks state as provided in prior work before. First of all, its definition is different and plays a crucial role, since a programmer is encouraged to drive the implementation based on definitions of TaskHeaderS. Below there is a discussion of how and why it is important.

The three most complicated problems for task offloading are regarded as: task subdivision, complexity evaluation and bundling. Mobile environment is extremely sensitive to the success of solving these problems. Exploiting TaskHeader to solve them can be very useful, because in this data-driven paradigm (as in many other implementations for offloading) inputs to TaskHeader are already calculated at the point, where TaskHeader offloading decision is to be made. Each of these points is considered in turn.

Task subdivision: Various tools for connecting parts of programs can be implemented in TaskHeader, which means that it can create more fine grained TaskHeaderS, connecting them using these tools. For instance, function call can be expressed as some specific task being an input to a TaskHeader. For loop can be expressed by argument initializers. Specifying each initializer would be the same as naming each entry of for loop, but it can got around this problem easily by passing a list of initializers as another task's output, which comes as the argument. Flexibility in task subdivision is useful for two reasons. Firstly, conversely to conventional programming languages, the syntax of TaskHeader and task evaluation function is used to subdivide application into many units suitable for offloading. Secondly, TaskManager parallelizes different TaskHeaderS execution and different initializers for their arguments. In this way execution can be much by exploiting parallelism.

Complexity evaluation. Currently some tools make complexity very hard to predict. Namely, those which generate jump instructions in machine code: function calls, loops, branches, etc. Raising them to TaskHeader level means that, since all the input values are calculated before offloading decision, all the functions used values are already known, and their size is known, amount of iteration in the loops are known, etc. What with analysis of TaskHeader, removes their unpredictability. For these reasons, programmer is strongly advised to thoroughly think of alternatives before using any construct introducing a jump instruction. Then, if he is sure that the construct is necessary, he should consider including approximation of their performance in task evaluation function.

Bundling. It is merging units together in order to adjust the complexity of tasks offloaded. To perform this successfully, units must be fine grained enough and the ability is needed to evaluate their complexity well, so the level of bundling can be adjusted appropriately. These are the two problems described above and TaskHeader flexibility is crucial to both. Since bundles are to be shipped over the network, compact representation is also significant, and TaskHeader provides it, because TaskManager does not need to resend the code for each unit executed, it is enough to send the code with list of initializers for each argument.

As further examples programs in pseudocode are provided below as an aid to understand the definition of TaskHeader.

Example 1:

```
Check([queen1, queen2, ..., queen8]) {
      ...
      //enclosed code in any language to check whether they intersect each other
      ...
      if (intersect) then return Primitive.True
                else return Primtiive.False
}

FindSafePositions(Check([queen1 = <{1..8}, {1..8}>, queen2 = <{1..8}, {1..8}>, ..., queen8 =
<1..8, 1..8>]) {
      List results = [];
      for ([q1, q2, ..., q8] = traverse through all entries specified) {
             if (Check([q1, q2, ..., q8]) == Primitive.True) {
                    results += [q1, q2, ... q8];
             }
      }
}
```

[...] - represents a list
{...} - value between the curly brackets represent different values to be instantiated with Platform contains of convenient implementation for accessing inputs, traverse all task units of inputs, and for similar frequently used features.

The example above finds all the positions in which 8-queens can be located in order for them not to be able to reach each other. TaskManager analyzes TaskHeader, and in this case it is able to parallelize Check uses on different machines.

Example 2 being a recursion example:

```
pred(x) { //Predecessor function
    if (x > 0) then return [x - 1];
            else return [];
}
//Counting fibonacci numbers
fib(x = []) {
    return 0;
}
fib(x, fib(x = [pred(x)]], fib(x = [pred(pred(x)]])) {
    return fib(pred(x)) + fib(pred(pred(x)));
}
Count(fib(100)) { //returns 100th Fibonacci number
    return fib(100); }
```

In this case, a predecessor function is needed to set the base case for recursion. There is another nice trick: no need to initialize fib with all of these arguments is given because other arguments are initialized by the x argument In to predecessor. So just x is initialized. It can be made sure that the TaskHeader is still complete, because it is branched in the tree form and predecessor sets the leaves of the tree at x = 0.

In this case, also the two calls corresponding to fib(x - 1) and fib(x - 2) can be parallelized. However, it is not likely to be useful because of networking overhead. Still it would be beneficial for tasks representing similar tree structure and having more complex TaskBody. It is not always possible to parallelize the recursion, but each its task unit can be always offloaded if TaskManager decides that it may be beneficial.

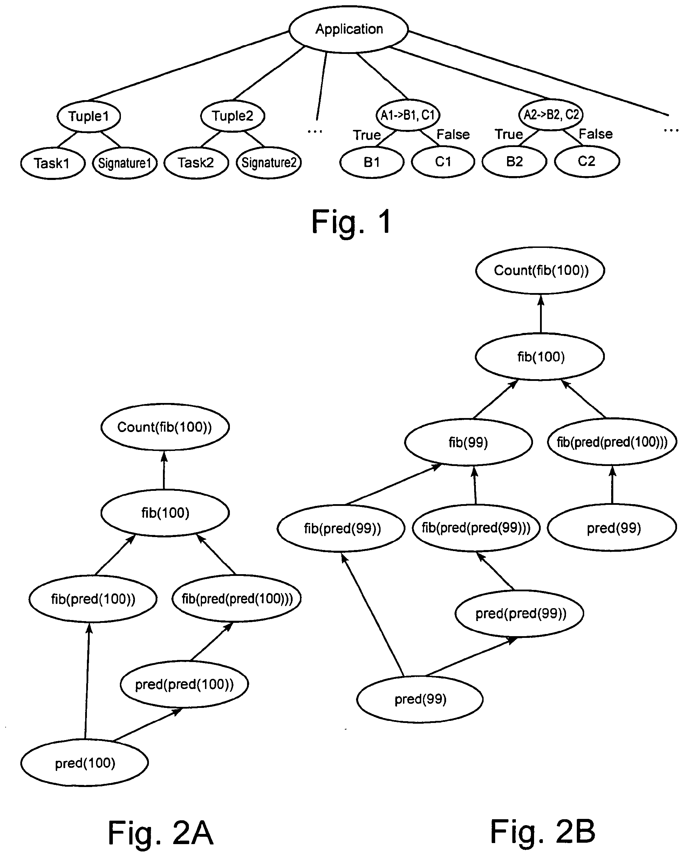

Fig. 2 shows the outline of ordering graph in this case and proceeds one step further.

Anagrams:

```
rest(word) { //returns a list of possible entries without any one symbol
    results = [];
    for (int i = 0; i < word.length; i++) {
            results += word but ith symobl; }
    return results; }
    //Finds the anagram.
anagram(word, anagram(word = [rest(word)]) ) {
    results = [];
    for (i = 0 ... word.length - 1) {
            toAdd = word[i];
            for (j = pass through all anagram(word = [rest(word)]) entries) {
                    perm = toAdd + j;
                    results += perm;
            }
        }
    return results; }
```

This example, for instance, is more interesting than Fibonacci because in parallel anagram instance with any entry of the list returned by rest(word) can be offloaded. These are still too small examples to be applied with huge success practically but are short and demonstrates the concept.

Information retrieval applications can enjoy great use of the framework's ability to provide flexible offloading and parallelize it boosting efficiency significantly. For example, searching for the most frequent word in the text:

```
equality(check, text) {
    freq = 0;
    for (word: traverse all words in text) {
            if (check is symbolically equivalent to word) freq++;
    return freq;
}
frequency(check, text = {/* some text */}, equality(check, text)) {
    freq = 0;
    for (word: traverse text)
            if (equality(check, word)) {
```

```
                freq++;
            }
        return freq;
    }
 mostFrequentInText(frequency(check = {word1, word2, ...}, equality(check, text))) {
        maxFreq = 0;
        for (word: traverse {word1, word2, ...}) {
                if (
    } }
```

This example is highly parallelized by TaskManager. Using bundling technique described below, TaskManager is able to offload and parallelize at two levels by bundling forming a partition: in frequency of check, and then in equality of text. Since TaskManager adjusts the best level of parallelism this may be very useful for analysis of long texts and dictionaries of words to be checked with.

Also, the difference as for loop in other programming languages is pushed to TaskHeader in order to give TaskManager a chance of parallelizing the calculations.

As possible add-ons there are numerous of possible boosts to TaskHeader and how it is interpreted by Task-Manager, but it is focussed on some vital of them herein.

First of all, possible boost for memory management is addressed. Lists of InitializerS tend to be big in some cases. Since they are kept in local memory and also shipped over the Internet it may become significant overhead. To soften this problem interval method can be used. Interval method is a special library, which is to be written as future work. It is used for encoding and decoding specific intervals for the sake of reducing the cost of storing intervals. Programmer interfaces the library by passing the interval he wants to use and library returns its compressed value, or the other way around. Not all the intervals can be compressed like this, however, most widespread concepts like iterations over integers or symbols can. For instance, rather than representing list of Initializer as described in [1, 2, 3, 4, 5, 6] it can be represented just by the interval it covers, i.e. 1-6.

Second feature, which may be handy, is list level recursion. At the moment possibility to exploit recursion is already present. However, a tool for Initializer level recursion may be more comfortable to program and can make it easier for TaskManager to understand the intentions of a programmer. This feature means that a programmer can include special variable called R, to its Initializer list, performing some task T on which would mean that T will be executed with all entries of the Initializer list, and Initializer list will be extended by their results. For instance:

```
 Naturals(y) {
        if (y < 100) then return [y + 1];
                else return [];
 }
 Do(A(x = {1, Naturals(R)})) {
        //do something
 }
```

would mean that Do will use the results of A(1), A(2), ..., A(100).

These features may claim useful when trying to adapt the system for a practical use, since TaskHeader's definition is very important for communicating programmer's intentions, and programmer's desire to offload specific units, therefore, the more flexibility in this communication protocol exists, the easier the goals to achieve are.

Referring more specifically to the TaskBody, in task body there sits all the code to be executed. Most of the known languages such as Java can be used for TaskBody. In most cases, it is preferable to have a bytecode based language, as compiled code can then be shipped on different architectures and interpreted on top of them. There are some restrictions to the syntax, which can be used, however: Syntax generating machine code jump instructions makes complexity harder to predict. Therefore, programmer, which seeks for precise complexity evaluation should keep in mind that such things as loops, branches, break statements, etc. makes impossible to do that precisely. Instead, where possible, programmer is encouraged to exploit TaskHeader flexibility and use branching technique described below. All the variables accessed are local except the access of the results of TaskHeader_Unit_Complete described above. No function calls are possible. Every function, which is used in TaskBody, must be described in TaskHeader and accessed in the way presented below. Can access the results just of the complete TaskHeader_Unit_Complete, which can be extracted by the algorithm defined in definition 8 above from the TaskHeader_Complete provided in the argument list in the definition of the respective TaskHeader. These results are accessed by specifying the structure of specific TaskHeader_Unit_Complete to access. Every TaskBody must return result of type Primitive.

Referring to branching in more detail a possible syntax is:

A -> B, C (just a compact notation for usual if A then B else C)

where A, B, and C are TaskHeader_Complete. <TaskHeader, TaskBody> tuple for each, with the same Name must be defined at another place in code, but do not need to be complete. A, B, C themselves, however, must be complete at the point, because they do not create new names, just instantiate already defined tasks, and there is no way to reach them for later instantiation.

Since jump instructions make it impossible to estimate task's complexity perfectly, it has been decided to introduce aid for a programmer to perform branching, which does not intervene with complexity calculations and help to make tasks fine grained. However, this branching does not help in all the occasions, therefore, usual branching possibility is left, but if precise complexity evaluation is needed, should be used with care.

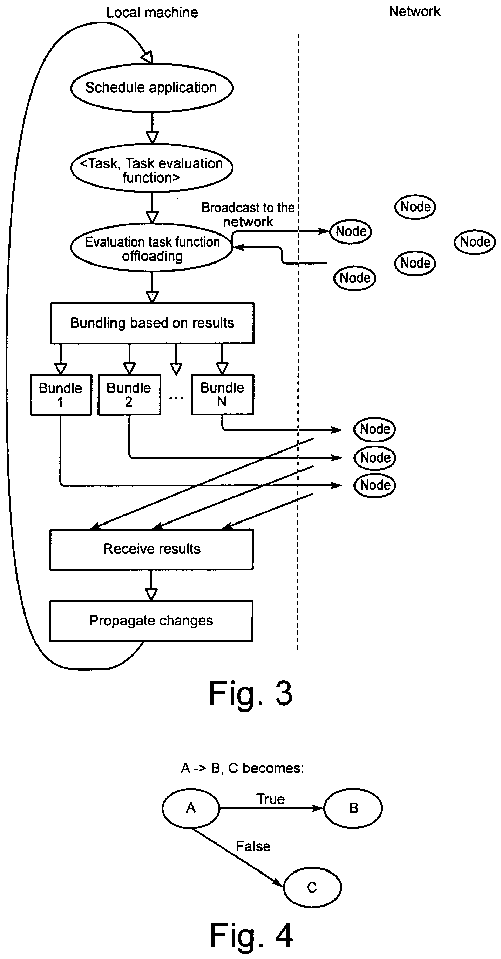

This syntax may be used with nice benefits, for example, in the case when there is an "if"-statement with its "then" or "else" block being much more computationally expensive than the other. Then the TaskHeader defining if needs to guess the complexity. However, if condition, "then", and "else" are going to be made tasks, the same situation as in Fig. 3 will occur where before offloading the task, after evaluating the condition, the complexity can be successfully calculated.

With regard to the format Primitive which is a type for communicating information: The mentioned language introduces new data type called Primitive which is the protocol for communicating data amongst tasks. Whenever task B uses task A, B does not access any other information of A, but A's result. Result must always be of the type Primitive.

Exact Primitive definition may vary from one implementation to another, but the most important features it has are: 1) From the type, it must be possible to decide how much memory it requires. This feature makes the complexity evaluation easier, since input/output size is usually significant factor when offloading to the network or analyzing the data. Therefore, a programmer in his implementation must specify the type/size of Primitive it uses. It is done for each task, to control its result size, and for each task's each input, to control the inputs size. 2) It must give enough flexibility to express various data constructs like integers, strings, lists, etc. More sophisticated features, like enabling Primitive to contain a data structure definition with its instance itself, are platform implementation dependent.

Referring to the analysis of complexity evaluation possibility, from the definitions provided above, it follows that in most of the cases amount of data transferred is easy to control. If a programmer wants to evaluate the upper bound of size of a task to be transferred via the Internet, it is enough to sum the size of its inputs, TaskBody, and output.

Evaluation of the complexity in terms of time is more complicated. It is caused by a few factors branch prediction and impossibility to predict amount of loops iterations (can be seen as branch prediction as well). To aid this, task evaluation function can be exploited again. Task evaluation function is a tool for complexity evaluation. It is of task type as well, therefore, it can take inputs and return results in the same way. Note that it is sent just when all the inputs to the corresponding task are provided. For these reasons, the same inputs (or their specific part) can be injected to task evaluation function. Therefore, a programmer can implement the application in a way that task evaluation function gets as inputs all the uncertain variables like branch values, amount of loop iterations, etc. It is not always possible to program this way, but it may be a useful support if approximate complexity evaluation value fits programmer's needs.

Referring to analysis of forbidding state communication, having variables in the argument list, allowing task call from another task as well as having branches inside the task, means that what tasks are going to be executed, in what order, and what instances of them depends on the code in the tasks heavily. It is essential to note that this is just another form of communication between the tasks because they impact each other in this way. To aid task offloading, this is forbidden and the only communication allowed should be by tasks' input/output.

Statistically, most of the functions consist of function calls or global variables, which would end up being enormously expensive RPCs for an offloaded task. On the other hand, these calls are too common to be forbidden, therefore, the proposed platform implementation pushes this responsibility to TaskHeader, at which tasks can define, which instantiations of which tasks they need to use.

Secondly, the use of function calls or global variables destroy the possibility of not just successfully offloading the tasks, but also parallelizing them. For example:

```
int A() {
    int sum = 0;
    ...
    for (int i = 0; i < 100; i++)
        sum += B(i);
    ...
    return sum;
}
```

In this case, it is impossible to offload separately and parallelize the instances of B, because there is no way to predict, which values B is going to be called with. A analysis shows that many programs written in usual programming languages cannot be divided into chunks for offloading because of this kind dependencies. This conclusion comes naturally, since programmer is used to another paradigms for communicating memory, executing functions, etc. than task offloading based programming would enforce him to.

In TaskHeader's definition programmer could have simply defined it like this:

```
int A(B(i = {1, 2, 3, 4, 5})) {
        int sum = 0;
        ...
        for (int i = 0; i < 100; i++)
                sum += B(i);
        ...
        return sum;
}
```

In this way TaskManager can be allowed to offload separately and parallelize instances of B.

The other good reason to forbid these communications is that it also contributes to predicting complexity. If a programmer couples a few tasks, task execution complexity can not be know since there may be internal calls to very complex tasks or branches, which can't be predicted. It is very important for mobile networks, because nodes are likely to spend short time periods in the network, and the harder complexity to predict is, the harder it is to employ such nodes successfully.

Also, syntax of task definition easily maps to the ordering graph. Meaning that a programmer can easier predict the offloading approach which TaskManager is going to take. Therefore, he can program in a way to exploit parallelism and fine grained offloading in the way so he gets the most benefit.

The core of the idea of forbidding these communications is that getting more restricted interface for tasks communication allows TaskManager to get internal knowledge into task, and to be able successfully offload and parallelize the tasks.

Task evaluation function

The task evaluation function allows a programmer to define what he means by complexity. It is implemented by a programmer and used by a TaskManger, e.g. of the executing node, to aid offloading decision. Each task has its own task evaluation function. Therefore, it can be also seen as task signature. When a task is ready for execution, i.e. it has received all the required inputs, TaskManager broadcasts the signature to the network. On receive, all the nodes in the network interpret the code of the task evaluation function and return their output.

The task evaluation function also outputs the value of type Primitive. The value must be $f(x)$, where $x$ is the amount of TaskUnit_Initialized of that particular task to be evaluated on the node, and $f(x)$ is an integer, value representing the cost of evaluating $x$ TaskUnit_Initialized on that particular node, which interpreted the code. The task evaluation function is also a task. It is just a different type of a task in the sense TaskManager treats it but not semantically.

Regarding the use of the task evaluation function, the most important point is that task evaluation function use definition is relaxed for whatever programmer's needs are and its expected application's network environment qualities. Since the task evaluation function is interpreted on every machine it is offloaded to it is the way for a programmer to communicate with the machines in the distributed system, reveal their qualities, and exploit their strong sides.

For example, a programmer willing to optimize execution time of a program may have tasks' evaluation task function measuring CPU computational capabilities, idleness, and networking overhead to reach the node. One way for a task evaluation function to find out an approximate networking overhead, is to assign current system's time as task evaluation function's input, which can be used to find the Round Trip Time (RTT or RTT/2) on the remote node.

For other tasks which are comparably heavy in terms of memory usage, task evaluation function, can analyze the availability of memory in the device, speed of access, etc. Since the function is implemented per task the same application can have completely different task evaluation function profiled with each task. Further, since task evaluation function is offloaded for each task, strong devices joining the network are easily discovered. Mobile environment is by nature very dynamic, therefore, it cannot be counted on a static state and re-evaluation of the situation is needed. Task evaluation function fits these needs well and is designed to aid it.

Distributed task execution is sharing of resources. The network discussed is particularly also mobile. Therefore, any person can join and leave it. Since resources are expensive and data needs to be secured from some nodes, distributed task execution vital feature on mobile network can be social groups. One node may want to give less security restrictions to access to one person than the other. Moreover, depending on this node is more or less willing to do more work and sacrifice more battery power. Task evaluation function is a suitable interface tool for this need. A node willing to offload the task just needs to send its id together with task evaluation function and task evaluation function on remote node may check the group of access of that particular id on the remote device and return the function depending on the identification (ID).

Other applications may need to do a bit of file management as running on other device. For instance, creating or editing files, searching for cached tasks completed, which result can be used by the offloading node, etc. That is comparably easy to arrange with task evaluation function whilst the feature is impossible to provide within most of other platforms semantics since their offloading model is much more restricted.

TaskManager

TaskManager which can be implemented and running on the executing node is responsible for the actual execution of tasks. It takes the task files and executes them to completion. The sections below analyze the most important principles of the TaskManager. Fig. 3 shows the outline of executional steps repeated by TaskManager ad infinitum.

Every TaskHeader A is analyzed as it comes as follows:

Item 1: From above it is known that TaskHeader A is ready to be executed when it is complete.
Item 2: From item 1 and above follows, that there exists TaskHeader_Complete A', which is corresponding to A.
Item 3: From item 1 and item 2 follows that all arguments must be either in the form of <Name, Initializer> or TaskHeader_Complete B' (item 2) which is corresponding (see above) to it.

To conclude, complete TaskHeader's direct ArgumentS TaskHeaderS are complete.

For each direct Argument B, TaskManager notes that there is an edge from B to A in a ordering graph and starts recursively analyzing B. The TaskManager works with assumption that program is possible to be evaluated, therefore, after any amount of nodes evaluated, graph must be of form of a Directed Acyclic Graph (DAG), i.e. there must always be complete TaskHeader_InstanceS (leaves of the DAG). For this reason, after analyzing all TaskHeaderS of a program it is expected to have some complete TaskHeaderS from which execution can be started initially.

Now consider branches "C -> D, E". C, D, and E are analyzed in the same way as described above with the exception of the conditional edges created. TaskManager will include conditional edge as in Fig. 4, which means that if result received from C is logical True, then D needs to be executed, otherwise E. Further (recursive) dependencies of C, D, E include edges as described in the paragraph above, i.e. unconditional.

Regarding scheduling and execution, as was stated above, TaskManager operates with the assumption that input graph is a directed acyclic graph (DAG). When scheduling tasks for execution it applies topological ordering. In other words, TaskManager schedules all leaves of the DAG for execution. Results of every node are received asynchronously. When a result is received, TaskManager removes all the outgoing edges of the node and schedules for execution all the nodes, which became leaves after this step. For node A deciding set of conditional edges, all its conditional edges are removed, and also all the nodes, which edges do not coincide with the result of A, are removed. Scheduling operates in these steps, ad infinitum.

Whenever a node is scheduled, its corresponding TaskHeader_Instance is executed. TaskHeader_Instance is always executed by executing all its units, which can be extracted by algorithm defined at 1.b.i.

Regarding bundling being in between scheduling and execution, it forms a partition of a node scheduled of TaskHeader_InstanceS. Many tools above work in connection to allow as fine grained offloading as possible.

Assume that TaskHeader_Instance is executed, when executing it, one natural way to execute is offload evaluation task function for each unit and offload each unit to a different node. However, it would cost huge communication overhead and in cases, where one unit is very fine grained, it does not even pay off offloading it. If it was done this way, programmer should make an assumption that TaskManager will offload each unit separately, and would need to take that into account when creating TaskHeader_Instance. That, however, would be a problem because it would much restrict programmer's flexibility. In particular, he could not, for instance, define most of iterative cases in the TaskHeader.

For these reasons, the evaluation task function for the node is offloaded just one time. As mentioned above, it returns function f(x), where x is an amount of TaskUnit_Initialized to execute and f(x) the cost of executing that many TaskUnit_Initialized on that specific node.

Now problem can be rewritten in these terms: N TaskUnit_Initialized are initialized to be evaluated, where N is the size of set which was extracted from TaskHeader_Instance scheduled for evaluation. A list of results of task evaluation function is received from m nodes in the network: $\{f_1(x), f_2(x), ..., f_m(x)\}$

The optimal partition is searched. However, partition algorithm depends on the interpretation of results of $f_i(x)$. As stated before, it returns cost of execution. Therefore, the natural assumption made is to optimize on the upper bound of a cost. In other words, finding an optimal solution in the sense that the partition chosen is such that the maximum cost, which is paid by some particular node, is minimized. Formally, partition $\{x_1, x_2, ..., x_m\}$ is called optimal, if and only if,

$$\forall y_1, y_2, ..., y_m. \; y_1+y_2+...+y_m=N \implies \max(f_1(x_1), f_2(x_2), ..., f_m(x_m)) < \max(f_1(y_1), f_2(y_2), ..., f_m(y_m))$$

This assumption has some advantages. First of all, even though what exactly programmer means by cost depends on his implementation, it is natural to claim that all the nodes are the same from this perspective and it is not necessary that any node experiences big cost to reduce other nodes expenses. It is a principle of fairness. Secondly, it maps very well to some frequent interpretations of cost, for instance, time. If cost represents time, and the task is to be finished in a short period of time, this solution is comparably optimal.

Less fair principle could also be applied, which is more suitable for some situations. It is optimizing on the sum of costs. Formally, partition {x1, x2, ..., xm} is called optimal, if and only if,

$$\forall\ y1, y2, ..., ym.\ y1+y2+...+ym=N\ \Rightarrow\ f1(x1)+f2(x2)+...+fm(xm) < f1(y1)+f2(y2)+...+fm(ym)$$

Regarding networking interface, the networking interface is supposed to receive tasks and communicate back the results. In the proposed platform it covers all the details of networking communication. At the moment, JAVA serialization and reflection is used to ship classes over the network.

There are a few different type of messages communicated to the network: Discovery broadcast - UDP; broadcasted to discover devices in the network. It causes networking overhead, therefore, is not done with each new task to be offloaded, but instead refreshed just when sufficient interval of time has passed. Discovery response - User Datagram Protocol (UDP); responses to discovery message from the network. Offload - Transmission Control Protocol (TCP); used to offload the tasks. Offload response - TCP; used to communicate back results.

Since task evaluation function, as well as tasks for execution are both treated like tasks, they are not differentiated when offloaded. Both they use offload and offload response messages to communicate the data.

While the invention has been illustrated and described in detail in the drawings and foregoing description, such illustration and description are to be considered illustrative or exemplary and not restrictive. It will be understood that changes and modifications may be made by those of ordinary skill within the scope and spirit of the following claims. In particular, the present invention covers further embodiments with any combination of features from different embodiments described above and below.

The invention also covers all further features shown in the Figs. individually although they may not have been described in the afore or following description. Also, single alternatives of the embodiments described in the figures and the description and single alternatives of features thereof can be disclaimed from the subject matter of the invention.

Furthermore, in the claims the word "comprising" does not exclude other elements or steps, and the indefinite article "a" or "an" does not exclude a plurality. A single unit or step may fulfil the functions of several features recited in the claims. The mere fact that certain measures are recited in mutually different dependent claims does not indicate that a combination of these measures cannot be used to advantage. The terms "essentially", "about", "approximately" and the like in connection with an attribute or a value particularly also define exactly the attribute or exactly the value, respectively. A computer program may be stored/distributed on a suitable medium, such as an optical storage medium or a solid-state medium supplied together with or as part of other hardware, but may also be distributed in other forms, such as via the Internet or other wired or wireless telecommunication systems. In particular, e.g., a computer program can be a computer program product stored on a computer readable medium which computer program product can have computer executable program code adapted to be executed to implement a specific method such as the method according to the invention. Any reference signs in the claims should not be construed as limiting the scope.

References

[1] "MapReduce: Simplified Data Processing on Large Clusters"; Jeffrey Dean, Sanjay Ghemawat; OSDI 2004

[2] "MAUI: Making Smartphones Last Longer with Code Offload"; Eduardo Cuervo, Aruna Balasubramanian, Daeki Cho, Alec Wolman, Stefan Saroiu, Ranveer Chandra, Paravmir Bahl; MobiSys 2010

[3] "CloneCloud: Elastic Execution between Mobile Device and Cloud"; Byung-Gon Chun, Sunghwan Ihm, Petros Maniatis, Mayur Naik, Ashwin Patti; EuroSys 2011

[4] "Dryad: Distributed Data-Parallel Programs from Sequential Building Blocks"; Michael Isard, Mihai Budiu, Yuan Yu, Andrew Birrell, Dennis Fetterly; EuroSys 2007

[5] "Scripting the cloud with Skywriting"; Derek G. Murray, Steven Hand; HotCloud 2010 Proceedings of the USENIX conference on Hot topics in cloud computing

[6] "Odessa: Enabling Interactive Perception Applications on Mobile Devices"; Moo-Ryong Ra, Anmol Sheth, Lily Mummert, Padmanabhan Pillai, David Wetherall, Ramesh Govindan; MobiSys 2011

[7] "Elastic Scaling of Data Parallel Operators in Stream Processing"; Scott Schneider, Henrique Andrade, Bugra Gedik, Alain Biem, Kun-Lung Wu; 2009 IEEE International Symposium on Parallel&Distributed Processing

EP 2 602 715 B1

[8] "Distributed processes: A concurrent programming concept"; Per Brinch Hansen Univ. of Southern California, Los Angeles; Communications of the ACM, Volume 21 Issue 11, 1978

[9] "Distributed Data-Parallel Computing Using a High-Level Programming Language"; Michael Isard, Yuan Yu; SIGMOD 2009

[10] "CIEL: a universal execution engine for distributed data-flow computing"; Derek G. Murray, Malte Schwarzkopf, Christopher Smowton, Steven Smith, Anil Madhavapeddy, Steven Hand; USENIX, NSDI 2011

**Claims**

1. Method of executing a computer program application, in which

   the computer program application is divided into a plurality of computational tasks; and
   at least one of the computational tasks of the computer program application is distributed by an executing node to at least one assisting node which is connected to the executing node via a network;
   **characterized by**
   providing a predefinable task evaluation function as a programmable interface;

   a) broadcasting the task evaluation function for each task from the executing node to a plurality of nodes connected to the executing node via the network, wherein said task evaluation function requests node properties of each of the nodes of the plurality of nodes;
   b) each of the nodes of the plurality of nodes provides its node properties to the executing node in response to interpreting the code of

   the task evaluation function;
   the executing node evaluates the node properties of the plurality of nodes, wherein capabilities of the plurality of nodes are judged from a score returned from the evaluation of node properties; and
   the executing node distributes the at least one of the computational tasks of the computer program application to at least one of the assisting nodes based on the judgement.

2. Method according to claim 1, wherein the at least one of the computational tasks is arranged in a body portion and a header portion, the body portion comprising source code of the at least one of the computational tasks to be executed and the header portion comprising arguments for the body portion.

3. Method according to claim 1 or 2, wherein the task evaluation function is arranged in a body portion and a header portion, the body portion comprising source code of the task evaluation function and the header portion comprising arguments for the body portion.

4. Method according to claim 2 or 3, wherein a complete flag is associated to each argument of the header portion.

5. Method according to any one of claims 2 to 4, wherein a header protocol is provided defining the structure of the header portion.

6. Method according to any one of the preceding claims, wherein the at least one assisting node provides results of the at least one of the computational tasks of the computer program application to the executing node in a predefined format.

7. Method according to any one of the preceding claims, wherein a computational task comprising iteration and/or recursion is identified within the plurality of computational tasks of the computer program application and the identified computational task is set as the at least one of the computational tasks of the computer program application.

8. Method according to any one of the preceding claims, wherein after evaluating the node properties of the plurality of nodes the executing node arranges plural of the plurality of computational tasks to a bundle in accordance with the node properties of the plurality of nodes and distributes the bundle to the at least one assisting node.

9. Method according to any one of the preceding claims, wherein the computational tasks of the computer program application are ordered in accordance with predefined criteria.

10. Method according to claim 9, wherein the predefined criteria comprise dependencies between the computational tasks of the computer program application.

11. Method according to any one of the preceding claims, wherein the task evaluation function is predefined prior to being provided to the plurality of nodes by the executing node.

12. Computer program comprising computer executable program code adapted to be executed to implement the method of any one of the preceding claims when being executed.

**Patentansprüche**

1. Verfahren zur Ausführung einer Computerprogrammanwendung, bei dem
die Computerprogrammanwendung in eine Vielzahl von Tasks unterteilt ist und mindestens ein Task der Computerprogrammanwendung durch einen ausführenden Knoten an mindestens einen Hilfsknoten verteilt wird, der mit dem ausführenden Knoten über ein Netzwerk verbunden ist,
**gekennzeichnet durch**
Bereitstellen einer vordefinierbaren Task-Bewertungsfunktion als programmierbare Schnittstelle,

a) Senden der Task-Bewertungsfunktion für jeden Task vom ausführenden Knoten an eine Vielzahl von mit dem ausführenden Knoten über das Netzwerk verbundenen Knoten, wobei die Task-Bewertungsfunktion Knoteneigenschaften jedes Knoten der Vielzahl von Knoten anfordert,
b) jeder Knoten der Vielzahl von Knoten dem ausführenden Knoten auf die Auswertung des Codes der Task-Bewertungsfunktion hin seine Knoteneigenschaften bereitstellt,
der ausführende Knoten die Knoteneigenschaften der Vielzahl von Knoten auswertet, wobei die Leistungsfähigkeit der Vielzahl von Knoten aufgrund eines Auswertungsergebnisses der Knoteneigenschaften beurteilt wird, und
der ausführende Knoten den mindestens einen Task der Computerprogrammanwendung auf Grundlage der Beurteilung an den mindestens einen Hilfsknoten verteilt.

2. Verfahren nach Anspruch 1, wobei der mindestens eine Task in einem Körperbereich und einem Kopfbereich angeordnet ist, wobei der Körperbereich den Quellcode des mindestens einen auszuführenden Tasks aufweist und der Kopfbereich Parameter für den Körperbereich aufweist.

3. Verfahren nach Anspruch 1 oder 2, wobei die Task-Bewertungsfunktion in einem Körperbereich und einem Kopfbereich angeordnet ist, wobei der Körperbereich den Quellcode der Task-Bewertungsfunktion aufweist und der Kopfbereich die Parameter für den Kopfbereich aufweist.

4. Verfahren nach Anspruch 2 oder 3, wobei ein Abschluss-Flag mit jedem Parameter des Kopfbereichs verknüpft ist.

5. Verfahren nach einem der Ansprüche 2 bis 4, wobei ein Kopfzeilenprotokoll vorgesehen ist, das den Aufbau des Kopfbereichs definiert.

6. Verfahren nach einem der vorstehenden Ansprüche, wobei der mindestens eine Hilfsknoten dem ausführenden Knoten Ergebnisse des mindestens einen Tasks der Computerprogrammanwendung in einem bestimmten Format bereitstellt.

7. Verfahren nach einem der vorstehenden Ansprüche, wobei ein Task mit Iteration und/oder Rekursion innerhalb der Vielzahl von Tasks der Computerprogrammanwendung identifiziert und der identifizierte Task als der mindestens eine Task der Computerprogrammanwendung bestimmt wird.

8. Verfahren nach einem der vorstehenden Ansprüche, wobei der ausführende Knoten nach der Beurteilung der Knoteneigenschaften der Vielzahl von Knoten mehrere der Vielzahl von Tasks gemäß der Knoteneigenschaften der Vielzahl von Knoten bündelt und das Bündel dem mindestens einen Hilfsknoten zuteilt.

9. Verfahren nach einem der vorstehenden Ansprüche, wobei die Tasks der Computerprogrammanwendung gemäß vordefinierter Kriterien angeordnet sind.

**10.** Verfahren nach Anspruch 9, wobei die vordefinierten Kriterien Abhängigkeiten zwischen den Tasks der Computerprogrammanwendung aufweisen.

**11.** Verfahren nach einem der vorstehenden Ansprüche, wobei die Task-Beurteilungsfunktion vor Bereitstellung an den mindestens einen Knoten durch den ausführenden Knoten vordefiniert wird.

**12.** Computerprogramm mit einem auf einem Computer ausführbaren Programmcode, der ausgeführt werden kann, um das Verfahren nach einem der vorstehenden Ansprüche bei der Ausführung zu implementieren.

**Revendications**

**1.** Procédé d'exécution d'une application de programme informatique,
l'application de programme informatique étant divisée en une pluralité de tâches de calcul ; et
au moins une des tâches de calcul de l'application de programme informatique est distribuée par un noeud d'exécution à au moins un noeud d'assistance qui est relié au noeud d'exécution via un réseau ;
**caractérisé par** la fourniture d'une fonction d'évaluation de tâche prédéfinissable en tant qu'interface programmable ;

a) la diffusion de la fonction d'évaluation de tâche pour chaque tâche du noeud d'exécution à une pluralité de noeuds reliés au noeud d'exécution via le réseau, ladite fonction d'évaluation de tâche demandant des propriétés de noeud de chacun des noeuds de la pluralité de noeuds ;
b) chacun des noeuds de la pluralité de noeuds fournit ses propriétés de noeud au noeud d'exécution en réponse à l'interprétation du code de la fonction d'évaluation de tâche ;

le noeud d'exécution évalue les propriétés de noeud de la pluralité de noeuds, les capacités de la pluralité de noeuds étant jugées à partir d'un score renvoyé par l'évaluation de propriétés de noeud ; et
le noeud d'exécution distribue l'au moins une des tâches de calcul de l'application de programme informatique à au moins un noeud d'assistance sur la base du jugement.

**2.** Procédé selon la revendication 1, l'au moins une des tâches de calcul étant agencée dans une partie de corps et une partie d'en-tête, la partie de corps comprenant le code source de l'au moins une des tâches de calcul à exécuter et la partie d'en-tête comprenant des arguments pour la partie de corps.

**3.** Procédé selon la revendication 1 ou 2, la fonction d'évaluation de tâche étant agencée dans une partie de corps et une partie d'en-tête, la partie de corps comprenant le code source de la fonction d'évaluation de tâche et la partie d'en-tête comprenant des arguments pour la partie de corps.

**4.** Procédé selon la revendication 2 ou 3, un drapeau complet étant associé à chaque argument de la partie d'en-tête.

**5.** Procédé selon l'une quelconque des revendications 2 à 4, un protocole d'en-tête étant fourni définissant la structure de la partie d'en-tête.

**6.** Procédé selon l'une quelconque des revendications précédentes, l'au moins un noeud d'assistance fournissant les résultats de l'au moins une des tâches de calcul de l'application de programme informatique au noeud d'exécution dans un format prédéfini.

**7.** Procédé selon l'une quelconque des revendications précédentes, une tâche de calcul comprenant une itération et/ou une récursion étant identifiée à l'intérieur de la pluralité de tâches de calcul de l'application de programme informatique et la tâche de calcul identifiée est définie comme l'au moins une des tâches de calcul de l'application de programme informatique.

**8.** Procédé selon l'une quelconque des revendications précédentes, dans lequel, après avoir évalué les propriétés de noeud de la pluralité de noeuds, le noeud d'exécution agence plusieurs de la pluralité de tâches de calcul à un faisceau conformément aux propriétés de noeud de la pluralité de noeuds et distribue le faisceau à l'au moins un noeud d'assistance.

**9.** Procédé selon l'une quelconque des revendications précédentes, les tâches de calcul de l'application de programme informatique étant ordonnées conformément à des critères prédéfinis.

10. Procédé selon la revendication 9, les critères prédéfinis comprenant des dépendances entre les tâches de calcul de l'application de programme informatique.

11. Procédé selon l'une quelconque des revendications précédentes, la fonction d'évaluation de tâche étant prédéfinie avant d'être fournie à la pluralité de noeuds par le noeud d'exécution.

12. Programme informatique comprenant un code de programme exécutable par ordinateur conçu pour être exécuté afin de mettre en oeuvre le procédé selon l'une quelconque des revendications précédentes lorsqu'il est exécuté.

Fig. 1

Fig. 2A

Fig. 2B

Local machine                                    Network

Fig. 3

A -> B, C becomes:

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2009271784 A1
- US 2010318999 A1

- US 2009241122 A1

### Non-patent literature cited in the description

- **JEFFREY DEAN ; SANJAY GHEMAWAT.** MapReduce: Simplified Data Processing on Large Clusters. *OSDI,* 2004
- **EDUARDO CUERVO ; ARUNA BALASUBRAMANIAN ; DAE-KI CHO ; ALEC WOLMAN ; STEFAN SAROIU ; RANVEER CHANDRA ; PARAVMIR BAHL.** MAUI: Making Smartphones Last Longer with Code Offload. *MobiSys,* 2010
- **BYUNG-GON CHUN ; SUNGHWAN IHM ; PETROS MANIATIS ; MAYUR NAIK ; ASHWIN PATTI.** CloneCloud: Elastic Execution between Mobile Device and Cloud. *EuroSys,* 2011
- **MICHAEL ISARD ; MIHAI BUDIU ; YUAN YU ; ANDREW BIRRELL ; DENNIS FETTERLY.** Dryad: Distributed Data-Parallel Programs from Sequential Building Blocks. *EuroSys,* 2007
- **DEREK G. MURRAY ; STEVEN HAND.** Scripting the cloud with Skywriting. *HotCloud 2010 Proceedings of the USENIX conference on Hot topics in cloud computing*

- **MOO-RYONG RA ; ANMOL SHETH ; LILY MUMMERT ; PADMANABHAN PILLAI ; DAVID WETHERALL ; RAMESH GOVINDAN.** Odessa: Enabling Interactive Perception Applications on Mobile Devices. *MobiSys,* 2011
- **SCOTT SCHNEIDER ; HENRIQUE ANDRADE ; BUGRA GEDIK ; ALAIN BIEM ; KUN-LUNG WU.** Elastic Scaling of Data Parallel Operators in Stream Processing. *IEEE International Symposium on Parallel&Distributed Processing,* 2009
- Distributed processes: A concurrent programming concept. Communications of the ACM. Per Brinch Hansen Univ. of Southern California, 1978, vol. 21
- **MICHAEL ISARD ; YUAN YU.** Distributed Data-Parallel Computing Using a High-Level Programming Language. *SIGMOD,* 2009
- CIEL: a universal execution engine for distributed data-flow computing. **DEREK G. MURRAY ; MALTE SCHWARZKOPF ; CHRISTOPHER SMOWTON ; STEVEN SMITH ; ANIL MADHAVAPEDDY ; STEVEN HAND.** USENIX. NSDI, 2011